# FASCICULE DE BREVET EUROPEEN

(11) **EP 0 352 204 B1**
(45) Date de publication et mention de la délivrance du brevet: **13.01.1993**
(21) Numéro de dépôt: 89430019.3
(22) Date de dépôt: 18.07.1989
(51) Int. Cl.: E02B 3/06

(54) **Procédé et dispositif d'implantation sur pieux d'appontements**
Verfahren und Vorrichtung zum Befestigen von Landungsbrücken auf Pfählen
Method and device for securing landing-stages on piles

(30) Priorité: 22.07.1988 FR 8810094
(43) Date de publication de la demande: 24.01.1990
(73) Titulaire: Poels, Henri, 20144 Sainte Lucie de Porto Vecchio (FR)
(72) Inventeur: Poels, Henri, 20144 Sainte Lucie de Porto Vecchio (FR)
(74) Mandataire: Moretti, René

(56) Documents cités:
- FR-A- 2 441 019
- GB-A- 1 220 689
- GB-A- 1 523 585
- US-A- 2 589 146
- US-A- 2 657 540
- US-A- 3 572 045

## Description

La présente invention a pour objet un procédé et des dispositifs d'implantation sur pieux d'appontements.

Le secteur technique de l'invention est celui de la fabrication et de l'installation d'appontements destinés à l'accostage et l'amarrage de bateaux.

Une des applications de l'invention est l'aménagement d'un plan d'eau, de type enceinte portuaire ou zone de mouillage abrité, pour accueillir des bateaux de plaisance.

On connaît en effet, de nombreux types d'appontements destinés à l'aménagement de ports, dont la conception s'apparente à celle de ponts de franchissement de cours d'eau et il existe de nombreuses sociétés dans chaque pays, qui fabriquent et installent ces équipements. On peut classer ces divers types d'appontements en deux grandes catégories par genre : celle des appontements dits flottants et celle des appontements dits fixes; à l'intérieur de ces grandes familles, on distingue deux types de sous-catégories, l'une par nature du matériau utilisé, qui peut être principalement du bois, de l'acier, de l'aluminium ou du béton, l'autre par les moyens d'ancrage qui peuvent être sur chaînes et corps morts, sur pieux battus dans le sol ou sur appuis posés au fond.

Ainsi parmi toutes les solutions que permettent les différentes catégories ci-dessus, les plus utilisées dans l'ménagement portuaire sont :
- soit les appontements flottants, ancrés par chaînes reliées à des corps morts posés sur le fond ou sur pieux battus et fichés dans le sol, dépassant au dessus de l'eau et le long desquels les appontements coulissent verticalement, (mais ceci ne concerne pas la présente invention);
- soit les appontements fixes (dans lesquels se situe la présente invention), et qui incluent en fait certains éléments de quais et tout type d'estacade; on distingue, d'une part, la partie des piles-supports et d'autre part, la partie tablier.

Le choix d'appontement fixe concerne les ports où le marnage n'est pas trop important et, lorsque l'on souhaite de pouvoir supporter des charges verticales assez lourdes, ou quand on désire une tenue dans le temps plus importante que pour des appontements flottants.

Ces solutions sont en effet, en général, plus onéreuses, et il faut qu'elles résistent plus longtemps pour être justifiées.

Malheureusement, ceci n'est pas toujours le cas, car les structures béton en particulier, surtout en précontraint, et placées très près de la surface de l'eau et même parfois immergées partiellement, se chargent d'eau et certains finissent pas rompre.

Peu de brevets ont été pris récemment dans ce domaine, car leur conception est de type connu depuis très longtemps, puisque assimilable à celle des ponts de franchissement des cours d'eau. La mise en oeuvre de ces solutions est très lourde, surtout pour les structures toutes en béton, car il faut alors préparer le fond de l'eau pour avoir un bon appui, une bonne répartition des charges et un niveau égal, nécessitant l'intervention de plongeurs; après, il faut un ponton grue pour la mise en place des piles, puis des structures de tabliers. En cas de problème sur celles-ci, il n'est pratiquement plus possible d'intervenir et de les réparer. L'entretien consiste alors à les remplacer en immobilisant à nouveau de gros moyens d'intervention.

Depuis maintenant une quinzaine d'années que les côtes maritimes sont aménagées intensément avec des zones d'abris et d'accueil, essentiellement pour les bateaux de plaisance, de nombreux équipements comme ceux cités ci-dessus ont été mis en place, et il s'avère que peu d'entre eux ont résisté plus de dix ans, même dans les appontements fixes, et dans les appontements flottants des interventions régulières d'entretien sont nécessaires tous les deux ans environ, sous peine de dégradation.

Par ailleurs, dans le domaine des aménagements lourds de port artificiel pour l'accostage de navires relativement importants et la circulation de véhicules sur le tablier des appontements constituants lesdits aménagements, on connaît la demande de brevet FR-A-2.441.019 publiée le 06 Juin 1980 sur des "barges destinées à former un appontement ou élément de quai d'accostage" : ce document nous enseigne en effet des barges comportant des piliers montés mobiles en hauteur de part et d'autre d'une piste longitudinale de circulation qu'elle forme, des moyens de déplacements en hauteur et de verrouillage par rapport à la barge desdits piliers pour assurer leur appui sur le fond de l'eau ou les relever pour le déplacement de la barge par flottaison au moyen d'un ballast disposé sous la barge et ayant avec elle des moyens de liaison et de guidage mobiles en hauteur et verrouillables, et disposés de part et d'autre de ladite piste, afin de faire émerger la barge entièrement au-dessus de l'eau grâce à d'autres moyens complémentaires de liaison de ballast, avec ses piliers disposés en appui sur le fond, pour former un appontement ou élément de quai d'accostage.

Ces moyens sont cependant très lourds ainsi que l'ensemble des équipements de mise en oeuvre qui sont propres à chaque barge appontement et l'ensemble ainsi constitué n'est pas vraiment adapté à l'équipement de port de plaisance, qui est l'application principale de l'invention.

A la lumière des expériences et des problèmes rencontrés, il était en effet nécessaire d'innover en créant de nouveaux dispositifs et en imaginant de nouveaux procédés d'installation.

La présente invention est le fruit d'études et d'essais réalisés en ce sens, constituant une nouvelle catégorie d'appontements, pouvant en particulier supporter de fortes charges et être implantés en toute zone portuaire ou semi-abritée, sans préparation du fond de l'eau ni usage de ponton-barge important, et pouvant être récupérés et/ou entretenus facilement et rapidement, de façon que, même si finalement le coût de l'investissement initial est relativement élevé, il est récupéré par l'allégement des moyens de mise en place et d'entretien.

Pour résoudre ce problème, l'invention a pour objet un procédé d'implantation sur pieux d'appontements pour l'accostage et l'amarrage de bateaux en zones relativement abritées selon lequel on remorque vers lesdites zones un appontement flottant de forme rectangulaire à structure de type caisson, supportant au moins quatre pieux verticaux, respectivement bloqués en position élevée dans un guide-support solidaire de l'appontement et répartis au moins par deux le long des côtés de celui-ci, et équipé de moyens pour assurer l'appui et le relevage de l'appontement par rapport à ces pieux, on positionne et on immobilise l'appontement à un endroit préalablement sélectionné, on descend les pieux dans leurs guides jusqu'à ce que leur extrémité inférieure atteigne le fond de l'eau, on relève horizontalement l'appontement à une hauteur choisie au-dessus de l'eau par déplacement relatif de celui-ci pa rapport aux pieux, on immobilise chaque pieu par rapport à son guide-support par un moyen de blocage, on remorque un autre appontement, que l'on positionne et immobilise à un emplacement choisi par rapport à l'appontement précédent, de façon à constituer de proche en proche une continuité d'appontements, et on relie chaque appontement aux appontements voisins en assurant la continuité de leurs planchers respectifs, de façon à permettre la circulation des usagers entre les bateaux et un moyen d'accès aux appontements : lequel procédé suivant l'invention est tel que les moyens assurant l'appui et le relevage de l'appontement étant constitués par des équipements amovibles interposés entre chaque pieu et l'appontement correspondant, on munit préalablement un appontement desdits équipements, on procède alors à la mise en place de cet appontement en faisant usage de ces équipements, puis, après immobilisation par les moyens de blocage, on démonte et on récupère ces équipements et on munit un autre appontement flottant de ces mêmes équipements, et on réutilise ces équipements pour la mise en place de cet autre appontement, ceci jusqu'à l'obtention, de proche en proche de la continuité d'appontements désirée.

L'invention a également pour objet un dispositif pour la mise en oeuvre du procédé, comportant un appontement flottant de forme rectangulaire à structure de type caisson muni de guides-support répartis au moins par deux le long des côtés de l'appontement, au moins quatre pieux mobiles verticalement et engagés à l'intérieur desdits guides-support, des moyens pour assurer l'appui et le relevage de l'appontement par rapport aux pieux, et des moyens de blocage de chaque pieu par rapport au guide-support auquel il est associé, tel que connu du FR-A-2 441 019; lequel dispositif suivant l'invention est tel que les pieux pouvant coulisser librement à l'intérieur des guides-support, les moyens pour assurer l'appui et le relevage de l'appontement sont constitués par des équipements amovibles interposés entre chaque pieu et l'appontement et susceptibles d'être réutilisés pour l'implantation d'un autre appontement.

Le résultat est un nouveau procédé et dispositif d'implantation sur pieux d'appontement.

Les avantages de tels procédé et dispositifs selon l'invention sont multiples, car ils permettent de satisfaire tous les besoins d'aménagement d'un plan d'eau pour l'accostage et l'ancrage de navires, avec une mise en oeuvre autonome, rapide et légère, ne nécessitant ni préparation du fond de l'eau, ni support maritime important.

En effet, la mise en oeuvre de la présente invention se fait directement depuis l'appontement flottant considéré, qui sert donc de plate-forme support pour sa propre implantation, réduisant ainsi les coûts d'opération

Par ailleurs, l'enfoncement des pieux peut se faire par simple appui du ponton lui-même ou si le poids du ponton n'est pas suffisant de tout poids additionnel éventuel mise en oeuvre d'une manière connue, par exemple par battage ou par vibrations.

Dans un mode de réalisation particulier, l'appontement est un caisson en béton permettant de supporter des charges importantes et d'avoir une bonne stabilité sur les pieux. Celle-ci est assurée, dans tous les cas, par l'encastrement des pieux dans leurs guides-supports solidaires de la structure. L'ensemble forme une charpente indéformable, bloquée en position et enfoncée dans le sol, comme une table sur ses quatre pieds.

Une fois l'appontement en place, les quatre pieux peuvent servir, par exemple, de base d'appui pour des bornes d'éclairage ou autre, et leur immobilisation par rapport à la structure de l'appontement peut être prévue réversible, de façon à pouvoir refaire descendre par glissement la structure le long des pieux jusqu'à la remettre en flottabilité.

Les pieux peuvent alors être relevés du sol et l'appontement récupéré par remorquage.

Ce type d'installation mobile est très intéressante pour les aménagements saisonniers dans des zones semi-abritées, telles que les plages ou les baies.

La description suivante se réfère aux dessins annexés qui représentent, sans aucun caractère limitatif, deux exemples de réalisation du dispositif suivant l'invention, qui sont donnés à titre d'illustration, mais d'autres réalisations peuvent être envisagées.

La figure 1 est une vue de dessus d'un appontement ayant une structure caisson en béton.

La figure 2 est une vue en coupe verticale longitudinale de l'appontement à structure en béton.

La figure 3 est vue vue en coupe verticale et transversale au niveau des pieux d'un appontement à structure en béton.

La figure 4 est une vue en coupe verticale et transversale entre deux pieux d'un appontement à structure en béton.

La figure 5 est une vue en coupe verticale et transversale entre deux pieux d'un appontement à structure en béton, dans une position flottante de remorquage.

La figure 6 est une vue de dessus d'un appontement ayant une structure caisson en métal.

La figure 7 est une vue de côté d'un appontement ayant une structure caisson en métal.

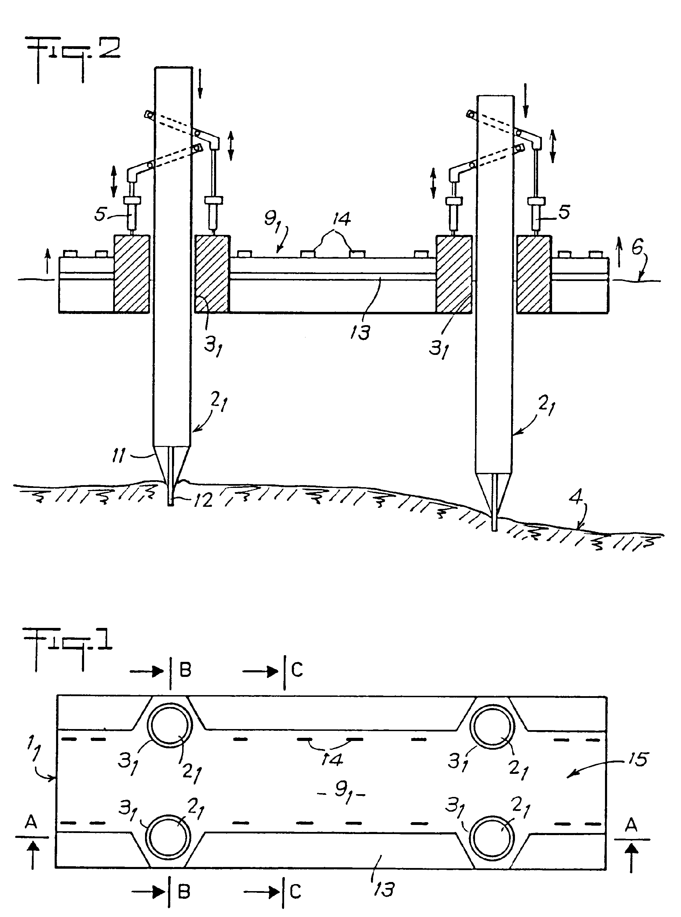

La figure 1 est une vue de dessus d'un appontement suivant l'invention et un premier mode de réalisation avec une structure en béton. Cette structure intègre, d'une part, un caisson flottant 15, dans la partie centrale axiale, et quatre guides-supports 3₁, situés deux par deux, de part et d'autre du caisson central. L'ensemble constitue un seul élément intègré 1₁ en béton.

La partie supérieure du caisson étanche 15 est fermée par un plancher 9₁, qui peut être constitué d'une dalle en béton assurant l'étanchéïté du caisson vers le haut avec des trappes de visite éventuelles et, suivant le cas, d'un plancher en bois posé par dessus.

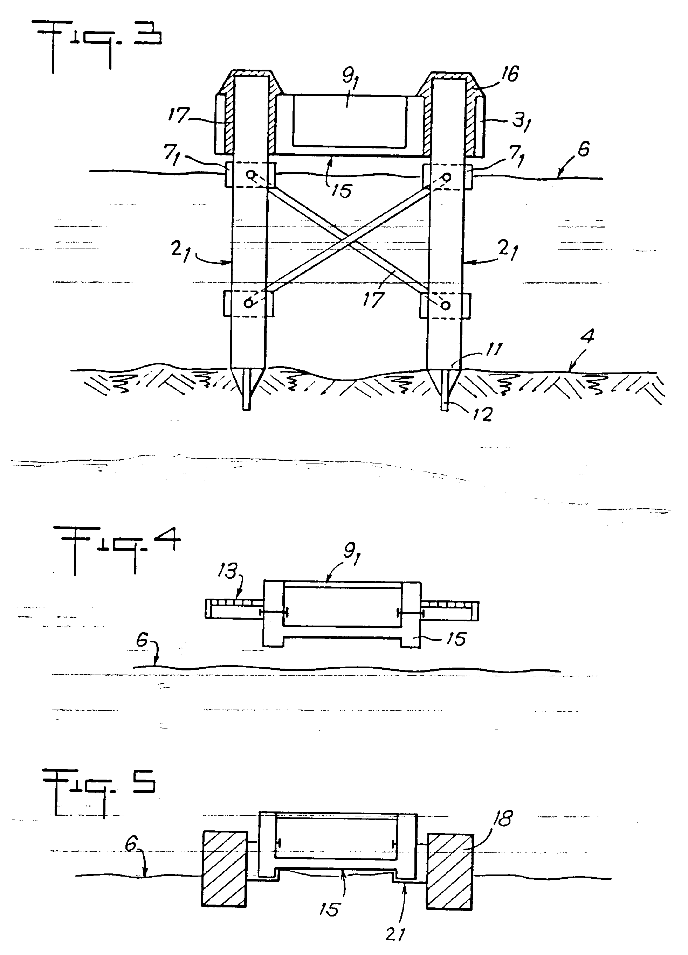

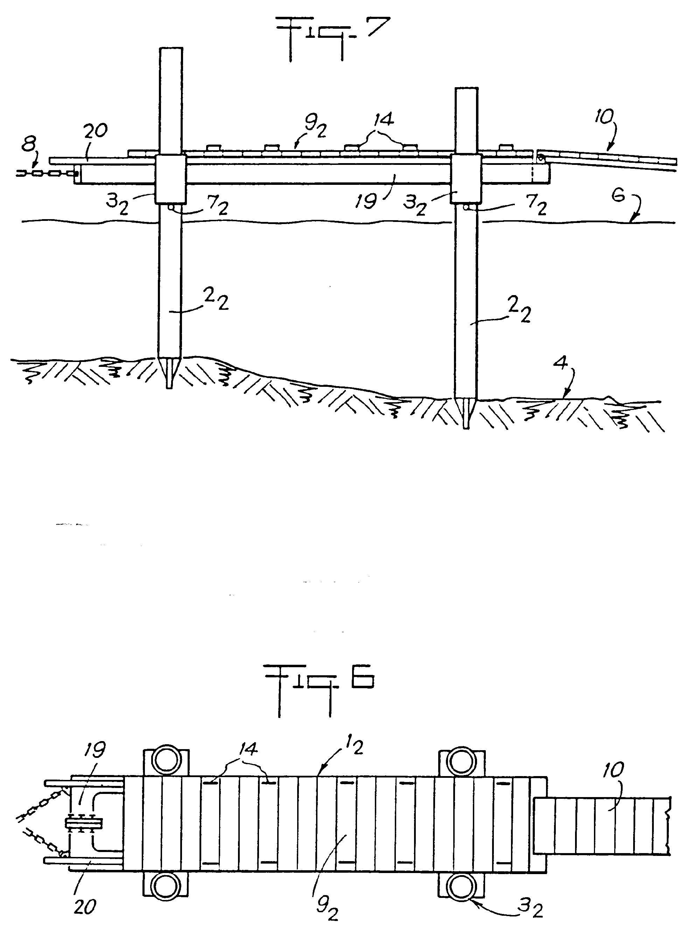

Entre les pieux et de part et d'autre du caisson central 15, un autre plancher 13, par exemple en bois, est fixé tel que décrit dans la figure 4, afin de permettre un accès plus facile aux navires qui accostent ou sont amarrés le long de cet appontement.

Les quatre guides 3₁ reçoivent chacun un pieu 2₁, glissant à l'intérieur tel que décrit dans la figure 2. Enfin sur le caisson peuvent être fixés divers anneaux ou taquets d'amarrage 14, permettant l'amarrage desdits navires.

La figure 2 est une vue en coupe verticale et longitudinale suivant le plan AA référencé sur la figure 1, d'un appontement type à structure en béton.

Dans cette figure, le caisson flottant 15 est représenté en flottabilité à la surface 6 de l'eau. En position remorquage, les pieux 2₁ sont remontés en position haute, de telle façon que les pointes inférieures 12 soient immergées à un faible tirant d'eau, sous le caisson. Quand l'appontement est positionné à la verticale de son site d'implantation, les pieux sont descendus par glissement à l'intérieur de leurs guides 3₁, jusqu'à ce que leur pointe 12 rentre en contact avec le fond 4 par leur propre poids, et quelles que soient la pente et la nature du fond qui ne nécessite donc aucune préparation. Les pieux sont alors plus ou moins immergés suivant la profondeur d'eau et, pour assurer leur pénétration dans le sol afin d'obtenir une réaction d'appui suffisante pour supporter ensuite tous les efforts verticaux et horizontaux que doit subir l'appontement, on peut utiliser tout moyen d'enfoncement sur chaque pieu. En particulier, si le poids de la structure est suffisant, compte tenu des efforts demandés et de la nature du sol, on pourra par exemple suspendre seulement celle-ci à chaque pieu successivement, et si l'on désire un encastrement supplémentaire, on utilise tout moyen connu d'enfoncement comme par exemple par battage ou vibrations, avec du matériel porté préalablement par l'appontement, permettant d'enfoncer toute la pointe 12 jusqu'à l'appui de la semelle 11, et même au delà si nécessaire.

Une fois les pieux stabilisés en position, on suspend alors la structure aux quatre pieux par tout moyen de levage 5, comme par exemple des systèmes à vérins, déplaçant des colliers autobloquants autour des pieux, ou de simples palans. Ce moyen de levage 5 et d'appui sur les pieux 2 transmet une partie du poids de l'appontement sur chacun desdits pieux; il peut être le même que celui utilisé pour enfoncer chacun de ceux-ci comme indiqué ci-dessus.

Quand l'appontement est relevé horizontalement et complètement au-dessus de l'eau à la cote souhaitée afin que les parties en béton soient hors d'eau, on immobilise et on bloque les quatre pieux 2₁ par rapport à leur guide 3₁, par tout moyen tel que décrit par exemple dans la figure 3.

Les moyens d'appui, d'enfoncement et/ou de levage sont démontés pour être transférés sur un autre appontement et être réutilisés.

Les bateaux peuvent alors venir accoster ou s'amarrer sur les taquets d'amarrage 14 et les passagers peuvent accéder à bord par le plancher 13, fixé contre les parois du caisson 15 à un niveau plus bas que le plancher 9₁.

La hauteur des guides 3₁ ainsi que tous les éléments de structure sont déterminés en particulier en fonction des efforts d'encastrement des pieux 2₁ dans ces guides, compte tenu des charges latérales que doit supporter l'appontement, la dimensions des pieux eux-mêmes, leur enfoncement dans le sol et la hauteur d'eau.

La figure 3 est une vue en coupe verticale et transversale suivant le plan BB référencé sur la figure 1, d'un appontement type en structure en béton.

Cet appontement est représenté en position définitive après mise en place et finition. Les pieux sont figurés ici, par exemple enfoncés dans un sol 4 assez dur, dans lequel la pointe 12 est juste encastrée jusqu'au niveau de la semelle 11. Les pieux 2₁ sont immobilisés et bloqués par rapport au guide 3₁ par trois moyens pouvant être utilisés conjointement pas sécurité, mais pouvant être utilisés indépendamment pour une installation provisoire par exemple, et d'autres moyens peuvent être employés également.
- Des colliers de serrage 7₁ sont fixés autour de chaque pieu, dont un au moins sous les guides 3₁ qui peuvent venir s'appuyer ainsi dessus. Quatre autres colliers peuvent être fixés à un niveau inférieur aux précédents et reliés entre eux par tout système d'entretoise tel que des barres de liaison 17 pour rigidifier l'ensemble de la table ainsi formé et soulager les encastrement des pieux 2₁ dans les guides 3₁.
- Une butée 16 coiffe chaque pieu à la partie supérieure, après avoir coupé les extrémités de celles-ci au même niveau. Ces quatre butées qui sont fixées par tout moyen de type boulons par exemple, aux guides 3₁ assurent donc l'appui sur la tête des pieux et forment une sorte de chapeau qui peut être fermé et utilisé comme support;
- Une résine 17 est coulée entre les guides et les pieux pour coller les uns aux autres et reprendre les efforts, surtout pour les implantations permanentes, car ce collage est le seul pratiquement irréversible. Il permet aussi d'éviter les vibrations éventuelles et d'empêcher toute corrosion interne.

Le fond du caisson 15 est ainsi mis hors d'eau au-dessus de la surface 6 et la structure béton de l'appontement n'étant plus immergée a une meilleure tenue dans le temps. Les pieux 2₁ peuvent être de préférence métalliques.

La figure 4 est une vue en coupe verticale et transversale suivant le plan CC référencé sur la figure 1 entre deux pieux d'un appontement type, ayant une structure en béton.

La figure représente le caisson 15, positionné au-dessus de l'eau, tel que décrit ci-avant, mais le plancher 9₁ est alors assez haut, du fait du volume dudit caisson qui doit être assez volumineux pour assurer la flottabilité de l'ensemble en cas de remorquage. On dispose alors un plancher 13 fixé contre les parois du caisson 15, à un niveau plus bas que plancher 9₁, tels que déjà décrits dans les figures 1 et 2, afin de faciliter l'accès aux navires amarrés, dont le pont peut être plus bas et éloigné du plancher 9₁.

La figure 5 est une vue en coupe verticale et transversale entre deux pieux d'un appontement à structure en béton, dans une position flottante de remorquage. Si la structure de l'appontement équipé de ses pieux et de son matériel d'implantation est trop lourde pour la flottabilité propre du caisson 15, et afin de ne pas trop augmenter celui-ci, on utilise pendant la phase remorquage et mise en place des caissons de flottabilité additionnels 18, fixés de part et d'autre du caisson central 15 de la structure de l'appontement à la place des planchers 13 décrits dans la figure 4.

Cette configuration en catamaran ou en trimaran assure la flottabilité et la stabilité nécessaires pendant les phases critiques de remorquage, surtout si on doit passer en zone non abritée.

Une fois les pieux positionnés et la structure relevée tel que décrit dans la figure 3, les caissons additionnels 18 sont alors démontés et récupérés avec le reste des équipements nécessaires à l'implantation et remplacés par les planchers 13, sans moyen de manutention particulier, surtout si on définit le volume de ces caissons pour qu'ils soient juste flottants seuls et sans efforts sur leur système de fixation 21, quand le caisson 15 est dans sa position définitive.

La figure 6 est une vue de dessus d'un appontement suivant l'invention et un deuxième mode de réalisation avec une structure caisson en métal et la figure 7 est une vue de côté de cet appontement.

L'implantation de cet appontement se fait par la même procédure que pour l'appontement en structure béton décrit dans les figures 1 à 5 précédentes.

On retrouve en effet une structure 1₂, constituant un seul élément intégré métallique, composé d'une part, d'un caisson 19 métallique assurant la flottabilité en remorquage et, d'autre part, d'au moins quatre guides 3₂ supports, dans lesquels coulissent quatre pieux 2₂.

Ce caisson métallique 19 peut être un cadre rectangulaire fermé, comme représenté sur la figure, mais toutes autres réalisations équivalentes sont possibles.

Les pieux 2₂ sont fichés dans le sol 4, comme décrit dans la figure précédente et sont bloqués par rapport aux guides 3₂ de façon à maintenir ladite structure horizontale au-dessus du niveau de l'eau 6, par tout système de type de tiges 7₂, enfilées à travers le pieu et débordant de part et d'autre pour faire appui au guide-support.

Le plancher 9₂ est réalisé par un platelage en bois reposant sur un cadre 20, lui-même fixé sur le caisson 19 et pouvant recevoir, par exemple, les anneaux et les taquets d'amarrage 14.

L'appontement ainsi implanté peut être relié d'une manière connue, d'une part, à d'autres appontements placés contre lui et rendus solidaires par des chaînes de liaison 8 et, d'autre part, à d'autres structures ou à la berge par une passerelle articulée 10, de tout type connu.

Ce type d'appontement métallique est relativement léger par rapport à ceux en structure en béton et son implantation est plus aisée. A contrario, sa stabilité et sa résistance sont plus faibles.

Aussi, cet appontement sera préféré pour les installations d'implantation provisoires et saisonnières, l'ensemble pouvant être récupéré facilement.

La présente invention n'est pas limitée aux modes de réalisations décrits ci-dessus, qui ne constituent que des exemples de fabrications auxquels des modifications et des variantes peuvent être apportées dans le cadre des revendications annexées.

## Revendications

1. Procédé d'implantation sur pieux d'appontements pour l'accostage et l'amarrage de bateaux en zones relativement abritées selon lequel on remorque vers lesdites zones un appontement flottant de forme rectangulaire à structure (1) de type caisson, supportant au moins quatre pieux (2) verticaux, respectivement bloqués en position élevée dans un guide-support (3) solidaire de l'appontement et répartis au moins par deux le long des côtés de celui-ci, et équipé de moyens (5) pour assurer l'appui et le relevage de l'appontement par rapport à ces pieux (2), on positionne et on immobilise l'appontement à un endroit préalablement sélectionné, on descend les pieux dans leurs guides (3) jusqu'à ce que leur extrémité inférieure atteigne le fond (4) de l'eau, on relève horizontalement l'appontement à une hauteur choisie au-dessus de l'eau (6) par déplacement relatif de celui-ci pa rapport aux pieux (2), on immobilise chaque pieu (2) par rapport à son guide-support (3) par un moyen de blocage (7), on remorque un autre appontement, que l'on positionne et immobilise à un emplacement choisi par rapport à l'appontement précédent, de façon à constituer de proche en proche une continuité d'appontements, et on relie chaque appontement aux appontements voisins en assurant la continuité de leurs planchers (9) respectifs, de façon à permettre la circulation des usagers entre les bateaux et un moyen d'accès (10) aux appontements, lequel procédé est caractérisé en ce que les moyens assurant l'appui et le relevage de l'appontement étant constitués par des équipements amovibles interposés entre chaque pieu (2) et l'appontement (1) correspondant, on munit préalablement un appontement desdits équipements, on procède alors à la mise en place de cet appontement en faisant usage de ces équipements, puis, après immobilisation par les moyens de blocage (7), on démonte et on récupère ces équipements et on munit un autre appontement flottant de ces mêmes équipements, et on réutilise ces équipements pour la mise en place de cet autre appontement, ceci jusqu'à l'obtention, de proche en proche, de la continuité d'appontements désirée.

2. Procédé d'implantation sur pieux d'appontements suivant la revendication 1, caractérisé en ce que lesdits appontements étant équipés de moyens pour assurer la pénétration et la stabilité de chacun des pieux (2) par rapport au sol (4), on enfonce chacun desdits pieux jusqu'à équilibrer leur capacité de réaction, de telle façon que chaque pieu puisse supporter au moins environ le quart du poids de la structure (1) et des surcharges qui peuvent s'y rajouter, on appuie simultanément sur tous les pieux en conservant la répartition des charges entre eux, et on relève alors ainsi ladite structure (1) par déplacement relatif de celle-ci par rapport auxdits pieux.

3. Procédé d'implantation sur pieux d'appontements suivant la revendication 2, caractérisé en ce qu'on utilise les mêmes moyens connus pour enfoncer chacun des pieux (2) dans le fond de l'eau que ceux (5) utilisés pour appuyer ensuite sur tous les pieux simultanément, afin de relever la structure (1) hors d'eau, lesquels moyens consistent à transmettre le poids d'une partie de l'appontement sur chacun desdits pieux (2).

4. Procédé d'implantation sur pieux d'appontements suivant l'une quelconque des revendications 1 à 3, caractérisé en ce qu'on rajoute de part et d'autre de ladite structure de l'appontement des caissons additionnels (18) de flottabilité, pendant toutes les opérations de remorquage et de mise en place, et on démonte et on récupère lesdits caissons (18) avec le reste des equipements nécessaires à l'implantation.

5. Dispositif pour la mise en oeuvre du procédé selon la revendication 1, comportant un appontement flottant de forme rectangulaire à structure (1) de type caisson muni de guides-support (3) répartis au moins par deux le long des côtés de l'appontement, au moins quatre pieux (2) mobiles verticalement et engagés à l'intérieur desdits guides-support (3), des moyens (5) pour assurer l'appui et le relevage de l'appontement par rapport aux pieux (2), et des moyens de blocage (7) de chaque pieu par rapport au guide-support auquel il est associé, caractérisé en ce que les pieux (2) pouvant coulisser librement à l'intérieur des guides-support (3), les moyens (5) pour assurer l'appui et le relevage de l'appontement sont constitués par des équipements amovibles interposés entre chaque pieu (2) et l'appontement et susceptibles d'être réutilisés pour l'implantation d'un autre appontement.

6. Dispositif d'implantation sur pieux d'appontements suivant la revendication 5, caractérisé en ce que la structure flottante de type caisson (15) et les quatre guides (3₁) supports constituent un seul élément intégré (1₁) en béton, comportant entre chaque guide (3₁) un plancher (13), par exemple en bois, fixe à un niveau plus bas que le plancher (9₁) contre les parois dudit caisson et permettant l'accès aux navires accostant ou amarrés à ladite structure.

7. Dispositif d'implantation sur pieux d'appontement suivant l'une quelconque des revendications 5 ou 6, caractérisé en ce que ledit moyen mécanique (7) d'immobilisation de chaque pieu (2), par rapport à son guide-support (3), est une butée (16) coiffant chaque pieu à sa partie supérieure et fixé par tout moyen au guide (3₁), et l'espace compris entre le pieu et chaque guide est rempli de résine (17), assurant un collage relatif entre les deux.

8. Dispositif d'implantation sur pieux d'appontements suivant la revendication 5, caractérisé en ce que la structure flottante (1₂), comporte au moins un caisson métallique (19) et au moins quatre guides-supports (3₂) métalliques, fixés audit caisson, qui porte lui-même un cadre (20), sur lequel repose un platelage formant plancher (9₂).

9. Dispositif d'implantation sur pieux d'appontements suivant l'une quelconque des revendications 5 à 8, caractérisé en ce que ledit moyen mécanique (7) d'immobilisation de chaque pieu (2), par rapport à son guide-support (3) est un collier de serrage (7₁), fixé autour dudit pieu, au-dessous dudit guide (3₁), et sur lequel celui-ci vient en appui, lequel collier est relié à tout autre collier fixé à un niveau inférieur autour de tout autre pieu par tout système d'entretoise (17).

10. Dispositif d'implantation sur pieux d'appontement suivant l'une quelconque des revendications 5 à 8, caractérisé en ce que ledit moyen mécanique (7) d'immobilisation de chaque pieu (2) par rapport à son guide-support (3), est une tige (7₂), enfilée à travers chaque pieu et débordant de part et d'autre pour faire appui au guide-support (3₂).

## Patentansprüche

1. Verfahren zum Befestigen von Landungsbrücken auf Pfählen in bedingt geschützten Zonen, gemäß dem man zu den genannten Zonen eine rechtwinklige, schwimmende Landungsbrücke mit einem Aufbau (1) des Kastentyps schleppt, die mindestens vier senkrechte Pfähle (2) trägt, die jeweils in erhöhter Position in einem mit der Landungsbrücke fest verbundenen Führungsträger (3) arretiert sind und entlang der Seiten desselben mindestens zu zweit verteilt sind und über Vorrichtungen (5) verfügen, die das Auflegen und Hochheben der Landungsbrücke gegenüber diesen Pfählen (2) sicherstellen, die Landungsbrücke an einer vorher ausgewählten Stelle installiert und fest verankert, die Pfähle in ihren Führungen (3) nach unten gleiten läßt, bis ihr unteres Ende den Grund (4) des Wassers erreicht, man die Brücke waagerecht in eine ausgewählte Höhe über dem Wasser (6) bringt, und zwar durch ihre bedingte Verschiebung gegenüber den Pfählen (2), man jeden Pfahl (2) gegenüber seinem Führungsträger (3) mit Hilfe einer Arretierungsvorrichtung (7) feststellt, man eine zweite Landungsbrücke heranschleppt, die man an einer in Bezug zur vorhergehenden Brücke ausgewählten Stelle auf- und feststellt, so daß beide zusammen eine zusammenhängende Brücke darstellen, und man jede Brücke mit den angrenzenden Brücken verbindet, wobei die Durchgängigkeit zwischen ihren jeweiligen Böden (9) sichergestellt ist, so daß auf ihr Passagiere zwischen den Schiffen und einer Zugangsvorrichtung (10) zu den Landungsbrücken hin- und hergehen können, wobei dieses Verfahren dadurch gekennzeichnet ist, daß die Vorrichtungen zum Auflegen und Hochheben der Landungsbrücke sich aus wegnehmbaren, zwischen alle Pfähle (2) und die entsprechenden Brücken (1) gesetzten Ausrüstungen bestehen, man eine Brücke vorab mit den genannten Ausrüstungen versieht, dann diese Landungsbrücke unter Benutzung dieser Ausrüstungen installiert, und dann, nachdem man sie anhand von Arretiervorrichtungen (7) festgestellt hat, man diese Ausrüstungen abmontiert und behält und eine weitere schwimmende Landungsbrücke damit versehen kann, man diese Ausrüstungen für die Aufstellung dieser nächsten Landungsbrücke wiederverwenden kann, bis man die gewünschte nahtlose Durchgängigkeit der Brücken erhält.

2. Verfahren zum Befestigen von Landungsbrücken auf Pfählen gemäß Anspruch 1, dadurch gekennzeichnet, daß die genannten Brücken über Vorrichtungen verfügen, mit denen die Pfähle (2) in den Boden (4) getrieben werden und die ihre Stabilität sicherstellen, man jeden der besagten Pfähle so weit versenkt, bis seine Reaktionsfähigkeit ausgeglichen ist, so daß jeder Pfahl mindestens etwa ein Viertel des Gewichts des Aufbaus (1) und noch weitere Lasten tragen kann, man gleichzeitig auf alle Pfähle drückt und dabei die gleichmäßige Verteilung der Lasten zwischen ihnen aufrechterhält, und man dann so den genannten Aufbau (1) durch entsprechende Verschiebung desselben gegenüber den genannten Pfählen hochhebt.

3. Verfahren zum Befestigen von Landungsbrücken auf Pfählen gemäß Anspruch 2, dadurch gekennzeichnet, daß man die gleichen, bekannten Vorrichtungen zum Einrammen der Pfähle (2) in den Wassergrund wie die anschließend zum gleichzeitigen Drücken auf alle Pfähle eingesetzten (5) benutzt, um den Aufbau (1) aus dem Wasser zu heben, wobei diese Vorrichtungen darin bestehen, das Gewicht eines Teils der Brücke auf jeden der genannten Pfähle (2) zu übertragen.

4. Vorrichtung zum Befestigen von Landungsbrücken auf Pfählen gemäß einem der Ansprüche 1 bis 3, dadurch gekennzeichnet, daß man beidseits des genannten Aufbaus der Landungsbrücke zusätzliche Kästen (18) zur besseren Schwimmfähigkeit während der Schlepp- und Aufstellungsarbeiten anfügt, und man die genannten Kästen (18) mit den übrigen für die Aufstellung benötigten Ausrüstungen wieder entfernt.

5. Vorrichtung zur Durchführung des Verfahrens gemäß Anspruch 1, umfassend eine rechtwinklige, schwimmende Landungsbrücke mit einem Aufbau (1) des Kastentyps, der ausgestattet ist mit Führungsträgern (3), die entlang den Seiten der Landungsbrücke mindestens zu zweit verteilt sind, mindestens vier senkrecht bewegliche Pfähle (2), die innerhalb der genannten Führungsträger (3) geführt werden, Vorrichtungen (5) für das Auflegen und Hochheben der Landungsbrücke gegenüber den Pfählen (2), sowie Arretiervorrichtungen (7) für jeden Pfahl zum Führungsträger, zu dem er gehört, dadurch gekennzeichnet, daß die Pfähle (2) innerhalb der Führungsträger (3) frei gleiten können, die Vorrichtungen (5) zum Auflegen und Hochheben der Brücke aus wegnehmbaren Ausrüstungen bestehen, die zwischen jeden Pfahl (2) und die Brücke gesetzt werden und für die Aufstellung einer weiteren Brücke wiederverwendet werden können.

6. Vorrichtung zum Befestigen von Landungsbrücken auf Pfählen gemäß Anspruch 5, dadurch gekennzeichnet, daß der schwimmende Aufbau des Kastentyps (15) und die vier Führungsträger (3₁) ein einziges Einbauelement (1₁) aus Beton bilden und zwischen jeder Führung (3₁) einen Boden (3₁), beispielsweise aus Holz, aufweisen, der in niedrigerer Höhe als der Boden (9₁) an den Wänden des besagten Kastens befestigt ist und den Zugang zu am genannten Aufbau anlegenden oder angedockten Schiffen erlauben.

7. Vorrichtung zum Befestigen von Landungsbrücken auf Pfählen gemäß einem der Ansprüche 5 oder 6, dadurch gekennzeichnet, daß die genannte mechanische Vorrichtung (7) zur Arretierung jedes Pfahls (2) gegenüber seinem Führungsträger (3) aus einem Anschlag besteht, der jeden Pfahl an seinem oberen Teil bedeckt und anhand einer beliebigen Vorrichtung am Führungsträger (3₁) befestigt ist, und daß der Zwischenraum zwischen dem Pfahl und jeder Führung mit Harz (17) gefüllt wird, so daß zwischen beiden eine bedingte Klebeverbindung hergestellt ist.

8. Vorrichtung zum Befestigen von Landungsbrücken auf Pfählen gemäß Anspruch 5, dadurch gekennzeichnet, daß der schwimmende Aufbau (1₂) mindestens einen Metallkasten (19) und mindestens vier metallene Führungsträger (3₂) aufweist, die am besagten Kasten befestigt sind, der selbst einen Rahmen (20) trägt, auf dem ein glatter, den Boden (9₂) bildender Belag aufliegt.

9. Vorrichtung zum Befestigen von Landungsbrücken auf Pfählen gemäß einem der Ansprüche 5 bis 8, dadurch gekennzeichnet, daß die genannte mechanische Vorrichtung (7) zur Arretierung jedes Pfahls (2) gegenüber seinem Führungsträger (3) aus einer Klemmschelle (7₁) besteht, die um den besagten Pfahl herum unter der genannten Führung (3₁) befestigt wird und auf der diese aufliegt, wobei diese Schelle mit jeder anderen, in niedrigerer Höhe um einen anderen Pfahl gelegten Schelle mit Hilfe eines beliebigen Verstrebungssystems (17) verbunden ist.

10. Vorrichtung zum Befestigen von Landungsbrücken auf Pfählen gemäß einem der Ansprüche 5 bis 8, dadurch gekennzeichnet, daß die besagte mechanische Vorrichtung (7) zur Arretierung jedes Pfahls (2) gegenüber seinem Führungsträger (3) aus einer Stange (7₂) besteht, die durch jeden Pfeiler hindurchgeführt wird, beidseits heraussteht und eine Auflage für den Führungsträger (3₂) bildet.

## Claims

1. Method for installing platforms on piles for the docking manoeuvre and mooring of boats in relatively sheltered zones according to which a floatable platform is towed towards said zones, said floatable platform being rectangular in shape and having a caisson-type structure (1) supporting at least four vertical piles (2) which are respectively locked in the raised position in a support-guide (3) integral with the platform and which are distributed at least in pairs along the sides thereof, and equipped with means (5) for supporting and raising the platform with respect to said piles (2), the platform is positioned and immobilized at a preselected location, the piles are lowered into their guides (3) until their lower end reaches the bottom (4) of the water, the platform is horizontally raised to a predetermined height above water level (6) by relative displacement thereof with respect to the piles (2), each pile (2) is immobilized with respect to its support-guide (3) via locking means (7), another platform is towed and positioned and immobilized in a predetermined location with respect to the preceding platform so as to gradually constitute a platform continuity, and each platform is attached to the adjacent platforms while ensuring the continuity of their respective floors (9), thus allowing the users to circulate between the boats and giving a means of access (10) to the platforms, which method is characterized in that, since the means for supporting and raising the platform are constituted by removable equipements interposed between each pile (2) and the corresponding platform (1), a platform is first fitted with said equipments, then it is installed by using said equipments, and, after immobilization by means of the locking means (7), said equipments are dismantled and fitted on another floatable platform, and they are used again for installing said other platform until the desired continuity of platforms is gradually reached.

2. Method for installing platforms on piles according to claim 1, characterized in that said platforms being equipped with means for ensuring the penetration and stability of each one of the piles (2) with respect to the ground (4), each of said piles is driven in until their reaction capacity Is balanced, such that each pile can support at least a quarter of the weight of the structure (1) as well as of any excess loads which are added thereto, pressure is simultaneously applied on all the piles while preserving the distribution of the loads therebetween, and said structure (1) is then raised by relative displacement thereof with respect to said piles.

3. Method for installing platforms on piles according to claim 2, characterized in that the same known means are used for driving each one of the piles (2) into the bottom of the water as those (5) used for subsequently applying pressure simultaneously on all the piles, in order to raise the structure (1) above the water, said means consist in transmitting the weight of part of the platform onto each one of said piles (2).

4. Method for installing platforms on piles according to any one of claims 1 to 3, characterized in that additional floatability caissons (18) are added on either side of said platform structure throughout the towing and installing operations and said caissons (18) are dismantled and recovered with the rest of the equipments required for the installing operation.

5. Device for carrying out the method according to claim 1, comprising a floatable platform which is rectangular in shape and has a caisson-type structure (1) provided with support-guides (3) which are distributed at least in pairs along the sides of the platform, at least four piles (2) vertically mobile and engaged inside said support-guides (3), means (5) for supporting and raising the platform with respect to the piles (2), and locking means (7) for locking each pile with respect to the support-guide to which it is associated, characterized in that since, the piles (2) are freely slidable inside the support-guides (3), the means (5) for supporting and raising the platform are constituted by removable equipments interposed between each pile (2) and the platform and are adapted to be used again for installing another platform.

6. Device for installing platforms on piles according to claim 5, characterized in that the floatable structure of caisson type (15) and the four support-guides (3₁) constitute a single integrated element (1₁) in concrete, comprising between each guide (3₁) a floor (13), such as a wooden floor, fixed at a level lower than the floor (9₁) against the walls of said caisson and allowing access to the ships docking or moored to said structure.

7. Device for installing platforms on piles according to any one of claims 5 or 6, characterized in that said mechanical means (7) for immobilizing each pile (2), with respect to its support-guide (3), is a stop (16) covering each pile at the upper part thereof and fixed by any means to the guide (3₁), and the space comprised between the pile and each guide is filled with resin (17), ensuring relative bonding between both of them.

8. Device for installing platforms on piles according to claim 5, characterized in that the floatable structure (1₂) includes at least one metal caisson (19) and at least four metal support-guides (3₂), fixed to said caisson, which latter supports a frame (20), on which rests a deck-forming floor (9₂).

9. Device for installing platforms on piles according to any one of claims 5 to 8, characterized in that said mechanical means (7) for immobilizing each pile (2), with respect to its support-guide (3) is a clamp (7₁), fixed around said pile, below said guide (3₁), and on which the latter comes in abutment, said clamp being joined to any other clamp fixed at a lower level around any other pile by any bracing system (17).

10. Device for installing platforms on piles according to any one of claims 5 to 8, characterized in that said mechanical means (7) for immobilizing each pile (2), with respect to its support-guide (3), is a rod (7₂), threaded through each pile and projecting on either side in order to support the support-guide (3₂).
